# EUROPÄISCHE PATENTANMELDUNG

(11) **EP 4 643 701 A1**
(43) Veröffentlichungstag der Anmeldung: **05.11.2025**
(21) Anmeldenummer: 24173408.6
(22) Anmeldetag: 30.04.2024
(51) Int. Cl.: A43B 17/00, B29D 35/14, A43B 3/00

(54) **DECKENMATERIAL FÜR SCHUHEINLEGESOHLEN, SCHUHEINLEGESOHLE MIT EINEM SOLCHEN DECKENMATERIAL UND HERSTELLVERFAHREN EINES BZW. EINER SOLCHEN**

(71) Anmelder: Allein Holding GmbH, 63801 Kleinostheim (DE)
(72) Erfinder: KATZER, Roland, 63801 Kleinostheim (DE)
(74) Vertreter: Kuhnen & Wacker Patent- und Rechtsanwaltsbüro PartG mbB

(57) **Zusammenfassung**

Verfahren zum Herstellen eines Deckenmaterials zum Aufbringen auf Schuheinlegesohlen-Rohlinge als Oberdecke und/oder Unterdecke, mit den Schritten:
i) Herstellen im RIM-Verfahren einer PU-Schaumkunststofflage;
ii) thermoplastisches Pressen der PU-Schaumkunststofflage in einer Pressvorrichtung derart, dass die Wandstärke der Schaumkunststofflage dauerhaft reduziert wird. Schuheinlegesohle bezogen mit einem solchen Deckenmaterial sowie Verfahren zum Aufbringen eines solchen Deckenmaterials auf eine Schuheinlegesohle, insbesondere auf eine RIM-PU-Schaumkunststoff-Schuheinlegesohle.

## Beschreibung

Die Erfindung bezieht sich auf ein Verfahren zum Herstellen eines Deckenmaterials zum Aufbringen auf Schuheinlegesohlen-Rohlinge. Die Erfindung bezieht sicher ferner auf ein Verfahren zum Herstellen einer Schaumkunststoff-Schuheinlegesohle mit einem solchen Deckenmaterial sowie auf eine derart hergestellte Schaumkunststoff-Schuheinlegesohle.

Schuheinlegesohlen, die fußseitig ein Fußbett aufweisen und aus geschäumtem 2-komponentigen RIM-Polyurethan bestehen, das aus Isocyanat und Polyol gebildet wird, sind aus dem Stand der Technik bekannt. Zur Herstellung von bekannten RIM-PU-Schuheinlegesohlen wird Isocyanat mit einem Polyol mittels eines Mischkopfes gemischt in eine RIM-Schäumform eingebracht, wo es in der geschlossenen RIM-PU-Schäumform zu Polyurethan aufschäumen kann, wodurch beispielsweise ein Basiskörper oder Grundkörper für eine RIM-PU-Schuheinlegesohle erzeugt wird. Nach Entnahme des Basis- oder Grundkörper- RIM-PU-Schaumkunststoff-Rohlings aus der Ausschäumform kann dieser Rohling, befreit von Schaumfahnen direkt in Schuhe eingelegt werden. Alternativ kann ein solcher Rohling an Orthopädieschuhmacher zur mechanischen Anpassung durch Materialabtrag, wie z. B. Schleifen, Schneiden oder ähnlichem, bereitgestellt werden, wodurch der Rohling an die Fußform eines Trägers und/oder an eine Schuhinnenform angepasst werden kann.

Es ist ebenfalls bekannt, einen aus 2-Komponenten- RIM-PU-Schaum hergestellten Basiskörper auf seiner Oberseite und/oder Unterseite mit einer Decke bzw. einem Bezug zu versehen, welche dem Schaumkunststoff-Schuheinlegesohlen-Rohling eine ansprechendere Optik verleiht und zur Verbesserung des Erscheinungsbildes der Schuheinlegesohlen beiträgt. Mit Aufbringen einer Decke wird gleichzeitig auch der Tragekomfort und/oder die orthopädischen Eigenschaften des Schuheinlegesohlen-Rohlings verbessert. Für herkömmlich verwendete Decken, wie Bezüge eines Schuheinlegesohlen-Rohlings auch bezeichnet werden, können beispielsweise Alcantara, Leder, Lederimitation, Textil, Vlies, Kork oder ähnliche, meist textile Materialien verwendet werden. Im Stand der Technik werden solche Decken beispielsweise mittels eines Heißklebers auf den Schuheinlegesohlen-Rohlings aufgebracht, wozu das Deckenmaterial jedoch ggfs. zuvor mit einer Folie beschichtet werden muss, damit der Heißkleber nicht von dem Deckenmaterial aufgesaugt oder dieses vom Kleber durchdrungen wird.

Eine andere Möglichkeit zum Aufkleben des Deckenmaterials ist es, wie in EP 2 929 792 A1 beschrieben, die Decke vor dem Aufbringen auf den Schaumkunststoff-Rohling auf ihrer Rückseite mit einer thermoplastischen Polyurethanschicht, kurz TPU-Schicht, zu versehen. In einem nachfolgenden Schritt wird die so beschichtete Decke auf eine Oberseite und/oder Unterseite des Schaumkunststoff-Schuheinlegesohlen-Rohlings direkt, ohne Auftragen weiterer Hilfs- oder Klebstoffe, auf den Schaumkunststoff mittels Hitze und Druck aufgebügelt.

Die eben beschriebenen Lösungen zum Aufbringen einer Decke auf einen Schuheinlegesohlen-Rohling haben gemeinsam, dass sie aufwändig sind. Dies kann beispielsweise davon herrühren, dass eine zusätzliche Klebstoffschicht oder eine TPU-Schicht auf die Decke aufgebracht werden muss, um die Decke am Schuheinlegesohlen-Rohling befestigbar zu machen. Dabei muss ein zusätzlicher Herstellschritt aufgeführt werden, welcher Kosten verursacht. Ferner kann es erforderlich sein, dass das Deckenmaterial beschichtet werden muss, beispielsweise um eine Verunreinigung des Deckenmaterials durch Klebstoffe zu vermeiden. Eine Beschichtung kann auch erforderlich sein, um das Deckenmaterial für die spätere Nutzung der Schuhsohle vorzubereiten, beispielsweise um die mechanischen Eigenschaften des Deckenmaterials, wie die Abriebfestigkeit, oder die optischen Eigenschaften des Deckenmaterials anzupassen, oder aber auch, um das Deckenmaterial beispielsweise mit PU-Schaumkunststoff verbindbar zu machen, als sogenannter Haftvermittler.

Aufgabe der Erfindung ist es daher, ein Verfahren zum Herstellen eines Deckenmaterials zum Aufbringen auf Schuheinlegesohlen-Rohlinge, insbesondere auf RIM-PU-Schaumkunststoff-Schuheinlegesohle-Rohlinge, sowie zum Herstellen einer Schuheinlegesohle, insbesondere einer RIM-PU-Schaumkunststoff-Schuheinlegesohle anzugeben, welches im Vergleich zu bekannten Lösungen mit verringertem Aufwand durchgeführt werden kann. Außerdem soll das hergestellte Deckenmaterial kostengünstig herstellbar und individuell anpassbar sein sowie gute mechanische, orthopädische als auch optische Eigenschaften aufweisen. Es soll außerdem eine mittels des erfindungsgemäßen Verfahrens herstellbare zwei- oder mehrschichtige Schuheinlegesohle, insbesondere zwei- oder mehrschichtige RIM-PU-Schaumkunststoff-Schuheinlegesohle angegeben werden.

Die Aufgabe wird durch ein Verfahren zum Herstellen eines Deckenmaterials gemäß Anspruch 1 sowie durch ein Verfahren zum Herstellen einer RIM-PU-Schaumkunststoff-Schuheinlegesohle gemäß Anspruch 6 gelöst. Die Aufgabe wird ferner durch eine Zwei- oder mehrschichtige Schuheinlegesohle gemäß Anspruch 12 gelöst. Bevorzugte Ausführungsformen sind in den abhängigen Ansprüchen angegeben.

Bei dem erfindungsgemäßen Verfahren zum Herstellen eines Deckenmaterials zum späteren Aufbringen auf Schuheinlegesohlen-Rohlinge als Oberdecke und/oder Unterdecke, wird eine PU-Schaumkunststofflage im RIM-Verfahren hergestellt. Die PU-Schaumkunststofflage wird derart in einer Pressvorrichtung thermoplastisch gepresst, dass die Wandstärke der Schaumkunststofflage dauerhaft reduziert wird. D.h. erfindungsgemäß wird im RIM-Verfahren zunächst eine PU-Schaumkunststofflage mit einer größeren Wandstärke erzeugt, wie die des späteren Deckenmaterials. Bei dem erfindungsgemäßen thermoplastischen Warmverpressen wird die Anfangswandstärke der PU-Schaumkunststofflage um einen Faktor 2 bis 10 oder darüber hinaus dauerhaft verringert, je nach verwendeter Isocyanat/Polyol-Mischung und Einsatzzweck, wobei hier orthopädische als auch mechanische sowie optische Eigenschaften berücksichtigt werden können. Dabei erzielt eine höhere Warmverpressung im Allgemeinen eine höhere Shorehärte, was ggfs. aber auch durch Wahl der Ausgangsstoffe (Isocyanat und Polyol) oder durch RIM-Prozessparameter erreicht werden kann. Jedoch kann die Shorehärte einer PU-Schaumkunststofflage nach einem Schäumen durch stärkeres Warmverpressen nur erhöht werden, sodass es ggfs. bevorzugt ist, weichere RIM-PU-Schäume bei der Erzeugung der PU-Schaumkunststofflage einzusetzen, damit ein größerer Einsatzbereich des Deckenmaterials erreicht wird.

Nach einer erfindungsgemäßen, dauerhaften Verformung der PIM-PU-Schaumkunststofflage durch thermoplastisches Pressen erhält das erfindungsgemäße Deckenmaterial eine vorbestimmte Wandstärke bzw. Dicke. Außerdem beeinflusst das thermoplastische (Ver-)Pressen die mechanischen Eigenschaften der RIM-PU-Schaumkunststofflage, insbesondere die elastische Verformbarkeit. Bevorzugt wird das PU-Material der PU-Schaumkunststofflage beim Wamrverpressen nicht geschmolzen, d.h. das thermoplastische Verpressen erfolgt unterhalb der Schmelztemperatur des PU-Materials, sodass die Schaumstruktur des PU-Materials beim thermoplastischen Pressen erhalten bleibt. Aus diesem Grund weist das Deckenmaterial die vorteilhaften Eigenschaften von im RIM-Verfahren geschäumten PU-Material auf. Dieses zeichnet sich beispielsweise durch seine hervorragende Abriebfestigkeit und durch die elastischen Eigenschaften des Materials aus, welche unter anderem durch die Schaumstruktur bedingt sind.

Durch das thermoplastische Pressen können erfindungsgemäß die mechanischen Eigenschaften des flexibel und hochelastisch verformbaren, durch das im RIM-Verfahren hergestellten PU-Deckenmaterials an die Anforderungen bei der Verwendung als PU-Deckenmaterial angepasst werden. Beispielsweise kann das thermoplastische Pressen derart erfolgen, dass die Neigung des Deckenmaterials zum elastischen Verformen erheblich reduziert wird, insbesondere wenn das erfindungsgemäße Deckenmaterial mit einem weiteren PU-Schaumkunststoff im RIM-Verfahren angeschäumt wird.

Dabei ist unter thermoplastischem Pressen, Verpressen bzw. unter thermoplastischer Verformung eine gewollte, dauerhafte - also plastische - Formänderung bei einer erhöhten Temperatur zu verstehen, die bevorzugt unterhalb der Schmelztemperatur des eingesetzten/erzeugten PU-Schaumkunststoffmaterials erfolgt. Die gewollte Formänderung wird größtenteils beibehalten, wenn sich das Deckenmaterial bzw. der verformte Bereich des Deckenmaterials abgekühlt hat, bzw. der Druck weggenommen wird. Mit anderen Worten, das thermoplastisch verformte bzw. gepresste RIM-PU-Deckenmaterial geht nach Entlastung nicht wieder in seine Ausgangsform zurück, sondern verbleibt in der gepressten Form mit reduzierter Wandstärke. Die Schaumstruktur des im RIM-Verfahren aus zwei Komponenten erzeugten RIM-PU-Deckenmaterials bleibt jedoch bevorzugt erhalten, weswegen die elastischen Eigenschaften des erfindungsgemäßen Deckenmaterials in einem gewissen Rahmen ebenfalls erhalten bleiben. Durch die thermoplastische Verformung unterhalb der Schmelztemperatur wird die Schaumstruktur des erfindungsgemäßen Deckenmaterials nicht zerstört, weswegen neben einer - wie untenstehend näher erläutert wird - besonders einfachen Anbindung des RIM-PU- Deckenmaterials mittels RIM-Verfahren an einen Grundkörper bzw. Basiskörper eines PU-Schaumkunststoff-Schuheinlegesohlen-Rohlings ermöglicht wird, auch die Anbindung, das Aufziehen auf bereits fertige Schuheinlegesohlen-Rohlinge, wie herkömmlich, möglich ist. Dabei bleibt die nach dem thermoplastischen Pressen eingestellte Polstereigenschaft des PU-Deckenmaterials erhalten bleibt.

Weiterhin ist es auch möglich das erfindungsgemäße Deckenmaterial auf einen PU-Schaumkunststoff-Schuheinlegesohlen beispielsweise aufzubügeln, wobei hier eine weiteres thermoplastisches Verpressen des erfindungsgemäßen Deckenmaterials aufgrund des erforderlichen Bügeldruck erfolgen kann, was aber nicht zwingend erfolgen muss. Bei einem solchen Aufziehen/Aufbügeln des erfindungsgemäßen Deckenmaterials kann es ausreichend sein, nur eines der beiden Bauteile, das Deckenmaterial oder den Sohlengrundkörper auf eine Fügetemperatur zu erwärmen. Jedoch können selbstredend auch beide Bauteile auf Fügetemperatur gebracht werden, wobei bevorzugt die Temperatur nur an der Oberfläche des Grundköpers und/oder nur an der Fügefläche des Deckenmaterials kurzzeitig knapp unterhalb oder an der Schmelztemperatur des eingesetzten RIM-PU-Schaumkunststoffs liegt. Dabei kann eine Temperaturerhöhung durch den aufgebrachten Bügeldruck für den Fügeprozess positiv ausgenutzt werden.

Aufgrund dessen, dass das thermoplastische Pressen des Deckenmaterials, d.h. die dauerhafte Verformung, in der einfachsten Ausführung eindimensional - in weiteren Ausführungen auch zwei- oder gar dreidimensional - bei Temperaturen des Deckenmaterials unterhalb der Schmelztemperatur erfolgt, kann das Pressen auch mehrfach bzw. mehrschrittig durchgeführt werden, um den Eintrag von mechanischen Spannungen in das Material beim Pressen zu reduzieren. Auch bei mehrfacher Erwärmung und Pressen bleibt die Schaumstruktur des Deckenmaterials erhalten, durch welche beispielsweise ein hoher Tragekomfort, gute Dämpfungseigenschaften sowie eine hohe Abriebfestigkeit des Deckenmaterials gewährleistet sind.

Durch das wiederholbare thermoplastische Pressen des erfindungsgemäßen Deckenmaterials kann die Wandstärke des Deckenmaterials auch nachträglich noch an neue Gegebenheiten angepasst werden oder das Deckenmaterial kann zur orthopädischen Optimierung bzw. Nachjustierung oder optischen Veränderung (erneut) verformt werden. So lassen sich beispielsweise für den Vorderfußbereich dünnere Wandstärken durch ein stärkeres Warmverpressen erzielen, womit beispielsweise im Fersenbereich ein höhere Dämpfungseigenschaft des erfindungsgemäßen Deckenmaterial erhalten bleibt.

Für Hersteller von Schuheinlegesohlen bzw. von Schuheinlegesohlen-Rohlingen bietet das erfindungsgemäße Verfahren den weiteren Vorteil: Die Eigenschaften des thermoplastisch gepressten Deckenmaterials, wie beispielsweise Wandstärke bzw. Dicke, Abriebfestigkeit oder Elastizität können relativ frei konfiguriert werden. Hersteller sind deshalb in Bezug auf Materialwahl und Eigenschaften des Deckenmaterials nicht auf bekannte Deckenmaterialen von Zulieferern eingeschränkt, sondern können durch das neuartige Verfahren ein entsprechendes Deckenmaterial nach eigenen Vorstellungen konfigurieren und herstellen. Weil die Schaumstruktur des RIM-PU-Schaumkunststoffs auch nach dem thermoplastischen Pressen erhalten bleibt, übertrifft das erfindungsgemäße Deckenmaterial bzw. die erfindungsgemäße thermoplastisch gepresste Schaumkunststofflage die Eigenschaften von bekannten Materialien wie Alcantara, Leder, Lederimitation, Textil, Vlies, Kork oder ähnlichen.

Die Eigenschaften des Deckenmaterials können relativ frei eingestellt werden, insbesondere im Bezug auf Wandstärke und Formgebung. Beispielsweise kann das Deckenmaterial mit Ausnehmungen versehen sein. Eine solche Ausnehmung kann das Hindurchtreten von PU-Schaum in einer RIM-Schäumform durch das Deckenmaterial hindurch ermöglichen oder zur Aufnahme von Stützteilen oder Dämpfungselementen ausgebildet sein.

Zur Durchführung des thermoplastischen Pressens sind verschiedene Varianten denkbar. Beispielsweise kann die PU-Schaumkunststofflage zunächst erhitzt werden und anschließend verpresst werden. Hierfür ist es nicht zwangsläufig erforderlich, dass die zum Pressen verwendete Form bzw. das verwendete Werkzeug beheizt ist. Das Erwärmen der erfindungsgemäßen RIM-PU-Schaumkunststofflage kann auf verschiedene Arten erfolgen. Beispielsweise kann die Schaumkunststofflage durch einen handelsüblichen Fön bzw. Heißluftfön oder andere Heißluftgeräte erwärmt werden, wobei darauf geachtet werden muss, dass der Schmelzpunkt des PU-Schaums an keiner Stelle der Schaumkunststofflage überschritten werden sollte, um die Schaumstruktur nicht zu zerstören. Die Erwärmung kann jedoch auch in einem Ofen oder einer ähnlichen Vorrichtung, wie z.B. einer Mikrowelle, erfolgen, solange die Schmelztemperatur des eingesetzten/erzeugten Polyurethans nicht überschritten wird. Denkbar ist hier auch eine Erwärmung von Teilen oder der vollständigen Schaumkunststofflage im Wasserbad oder in anderen den PU-Schaum chemisch nicht angreifenden Medien. In vorteilhafter Weise ist der Prozess der Erwärmung derart ausgestaltet, dass er im Rahmen einer Serienfertigung eingesetzt werden kann. Dies kann beispielsweise unter Einsatz eines Fördermittels, beispielsweise eines Förderbands, erfolgen, welches die PU-Schaumkunststofflage während des Erwärmens fördert bzw. während des Förderns erwärmt, beispielsweise mittels Infrarotstrahlung oder eines Heizkanals.

Alternativ oder zusätzlich kann eine beheizbare oder erwärmbare Form bzw. ein beheizbares oder erwärmbares Werkzeug zum Pressen der RIM-PU-Schaumkunststofflage verwendet werden. In diesem Fall ist es zwar nicht erforderlich, dass die PU-Schaumkunststofflage vor dem Einlegen in die Pressform erwärmt wird, weil die Erwärmung des Materials durch die Pressform erfolgen kann, jedoch kann optional eine Erwärmung der Schaumkunststofflage vor dem Einlegen in die heiße Form erfolgen, beispielsweise, um die Prozessstabilität zu verbessern oder um den Aufheizvorgang in der Pressform zu verkürzen oder zu vergleichmäßigen.

Beispielsweise kann durch das RIM-Verfahren zunächst eine PU-Schaumkunststofflage hergestellt werden, welche eine Wandstärke von einigen Zentimetern, beispielsweise von ungefähr 2 cm aufweist. Durch das anschließende thermoplastische Pressen kann die Wandstärke der RIM-PU-Schaumkunststofflage beispielsweise dauerhaft derart reduziert werden, dass sie nur noch wenige Millimeter, beispielsweise etwa 2 mm, beträgt.

Zur Herstellung von mehreren dünnen Schaumkunststofflagen besteht ferner die Möglichkeit, eine - beispielsweise in Form eines Blocks oder Quaders im RIM-Verfahren hergestellte - PU-Schaumkunststofflage in wenigstens zwei oder mehrere dünne Schaumkunststofflagen zu schneiden bzw. zu spalten. Diese Scheiben bzw. gespaltenen Schaumkunststofflagen können anschließend thermoplastisch gepresst werden, um deren Wandstärke permanent zu reduzieren und so aus dem RIM-PU-Schaumstoff ein erfindungsgemäßes Deckenmaterial herzustellen.

Das thermoplastische Pressen wird erfindungsgemäß bevorzugt bei Temperaturen unterhalb des Schmelzpunktes des erzeugten RIM-PU durchgeführt, beispielsweise bei Temperaturen zwischen 100°C und 200°C. Denkbar ist ein thermoplastisches Pressen von Teilen des erfindungsgemäßen Deckenmaterials oder des vollständigen Deckenmaterials. Das Schaummaterial wird also nicht oberhalb seines Schmelzpunktes erwärmt, wodurch es flüssig werden würde, seine Schaumeigenschaften verlieren würde und weitestgehend auch seine elastischen Eigenschaften verlieren würde. Stattdessen bleibt die Schaumstruktur des aufgeschäumten PU-Deckenmaterials bei einem thermoplastischen Pressen im Temperaturbereich zwischen 100°C und 200°C erhalten. Folglich bleiben auch die vorteilhaften Eigenschaften des RIM-PU-Schaummaterials, wie seine hervorragende Abriebfestigkeit, erhalten.

In einer bevorzugten Ausführungsvariante wird zumindest auf einer Oberseite der erfindungsgemäßen PU-Schaumkunststofflage eine versiegelte Oberfläche gebildet, die für RIM-PU-Schaumkunststoff undurchlässig ist. Die versiegelte Oberfläche verhindert, dass ein an das Deckenmaterial angeschäumter PU-Schaum durch das Deckenmaterial hindurchtritt. Diese Eigenschaft kann beispielsweise dann gewünscht sein, wenn das Deckenmaterial als Ober- oder Unterdecke eines Schuheinlegesohlen-Rohlings verwendet wird und verhindert werden soll, dass das Erscheinungsbild oder die haptischen/taktilen Eigenschaften des Deckenmaterials durch hindurchtretenden RIM-PU-Schaum beeinträchtigt werden.

Durch das erfindungsgemäße thermoplastische Reduzieren der Wandstärke der RIM-PU-Schaumkunststofflage und die dadurch eventuell hervorgerufene Verdichtung des Materials kann außerdem ein durchschlaghemmendes oder durchschlagverhinderndes Verhalten des daraus hergestellten erfindungsgemäßen Deckenmaterials erzielt werden, was den Einsatz eines derart hergestellten Deckenmaterials in Sicherheitsschuhen oder Einlagen für Sicherheitsschuhe ermöglicht.

Während des thermoplastischen Pressens können verschiedene Oberflächenstrukturen auf eine Oberseite der Schaumkunststofflage eingebracht bzw. eingeprägt werden. Beispielsweise kann ein reliefartiges Dekor auf eine Oberseite der Schaumkunststofflage eingebracht/eingeprägt werden, um der Oberseite eine haptische Textur zu verleihen, welche den Halt der Fußsohle eines Trägers und/oder den Halt der einer derartig ausgestalteten Einlegesohle im Schuh verbessert oder positive ergonomische Eigenschaften, wie eine bessere Durchblutung der Fußsohle bewirkt.

Ferner ist es möglich, optische Kennzeichen, wie Logos oder Schriftzüge, auf die Oberseite der Schaumkunststofflage einzuprägen, wobei bei der Ausgestaltung des Prägestempels eine hohe Gestaltungsfreiheit besteht.

Erfindungsgemäß wird außerdem ein Verfahren zum Herstellen einer Schaumkunststoff-Schuheinlegesohle aus Polyurethan (PU) im RIM-Schäumverfahren angegeben.

Das Verfahren zum Herstellen einer erfindungsgemäßen PU-Schaumkunststoff-Schuheinlegesohle im RIM-Verfahren beinhaltet ein thermoplastisches Pressen einer Schaumkunststofflage aus RIM-PU-Schaumkunststoff in einer Pressvorrichtung derart, dass die Wandstärke der Schaumkunststofflage dauerhaft reduziert wird. In diesem Schritt kann beispielsweise das Verfahren zum Herstellen eines erfindungsgemäßen Deckenmaterials nach einer der vorher beschriebenen Ausführungsvarianten ausgeführt werden. Besonders vorteilhaft ist es, wenn das thermoplastische Pressen bei Temperaturen zwischen 100 °C und 200 °C erfolgt, weil dies zu einer besonders stabilen dauerhaften plastischen Verformung der RIM-PU-Schaumkunststofflage führt, wobei gleichzeitig ein Aufschmelzen der Schaumstruktur der Schaumkunststofflage vermieden wird.

Die erfindungsgemäß so hergestellte thermoplastisch gepresste Schaumkunststofflage bzw. das so hergestellte Deckenmaterial wird anschließend in eine Formhälfte einer RIM-Schäumform eingelegt bzw. auf eine solche Formhälfte aufgespannt. Danach wird (erneut) eine Polyol-Isocyanat-Mischung in die RIM-Schäumform eingebracht, nun zum Ausbilden eines Sohlengrundkörpers aus RIM-PU-Schaumkunststoff.

Die RIM-Schäumform wird geschlossen und die Polyol-Isocyanat-Mischung kann ausreagieren, wobei die thermoplastisch gepresste Schaumkunststofflage bzw. das Deckenmaterial durch Anschäumen von RIM-PU-Schaumkunststoff während der Ausbildung des Sohlengrundkörpers an diesen stoffschlüssig angebunden wird.

Ohne den Schritt des thermoplastischen Pressens wäre die Schaumkunststofflage zu weich und würde dem sich in der RIM-Schäumform ausdehnenden RIM-PU-Schaumkunststoff ausweichen, wodurch keine wiederholbare, insbesondere orthopädisch wirksame Formgebung für den PU-Schaumkunststoff-Schuheinlegesohlen-Rohling erfolgen könnte. Weil sowohl die erfindungsgemäß thermoplastisch gepresste RIM-PU-Schaumkunststofflage bzw. das erfindungsgemäße Deckenmaterial als auch der daran angeschäumte RIM-PU-Schaumkunststoff Kunststoffe auf PU-Basis sind, erfolgt eine stoffschlüssige Verbindung zwischen den beiden Schichten. Die so geschaffene Anbindung der Decke an den Grundkörper ist äußerst widerstandsfähig und nicht mehr zerstörungsfrei lösbar.

Der so hergestellte PU-Schaumkunststoff-Schuheinlegesohlen-Rohling mit der daran angeschäumten Decke wird nach Aushärten des RIM-PU-Schaumkunststoffs entnommen.

Der PU-Schaumkunststoff-Schuheinlegesohlen-Rohling wird, falls erforderlich, in eine Schuhsohlenform zugeschnitten und kann optional durch Materialabtrag, wie Schleifen, weiterbearbeitet werden, beispielsweise, um ein 3D-Fußbett an der Oberseite auszubilden oder ihn an die Fußform eines Trägers anzupassen.

Durch die stoffschlüssige Verbindung des RIM-PU-Materials der thermoplastisch gepressten Schaumkunststofflage und des daran angeschäumten RIM-PU-Schaumkunststoffs wird ein stabiler PU-Schaumkunststoff-Schuheinlegesohlen-Rohling geschaffen, wobei die beiden Schichten, d.h. die Decke mit der Grundschicht/dem Grundkörper fest miteinander verbunden sind. Die Verbindung hält sogar den hohen mechanischen Belastungen beim Schleifen des PU-Schaumkunststoff-Schuheinlegesohlen-Rohlings stand.

Weil gleiche Materialen miteinander verbunden werden, nämlich das RIM-PU-Material der Schaumkunststofflage und der RIM-PU-Schaumkunststoff des Sohlengrundkörpers ist die Qualität der stoffschlüssigen Verbindung besonders hoch und die Verbindung besonders widerstandsfähig gegen Belastungen. Gleichzeitig wird die Herstellung eines Schuheinlegesohlen-Rohlings vereinfacht, weil die thermoplastisch gepresste Schaumkunststofflage nicht am Sohlengrundkörper festgeklebt werden muss, sondern unmittelbar in der RIM-Schäumform mit RIM-PU-Schaumkunststoff angeschäumt werden kann.

Ein zusätzlicher Klebstoff oder Haftvermittler ist nicht erforderlich. Vielmehr haften die thermoplastisch gepresste PU-Schaumkunststofflage und der daran angeschäumte RIM-PU-Schaumkunststoff aneinander, als ob es sich um ein und dasselbe Material handeln würde. Vorteilhafterweise können die beiden Schichten nicht zerstörungsfrei voneinander lösbar sein.

Aufgrund des thermoplastischen Pressens bleibt die grundlegende Struktur des PU-Schaumstoffs der Deckenschicht erhalten, da die Poren des RIM-PU-Schaumstoffs lediglich gestaucht werden. Somit ist eine thermoplastisch gepresste Schaumkunststofflage aufgrund ihrer "gestauchten" Schaumstruktur von einer nicht thermoplastisch gepressten PU-Schaumkunststofflage unterscheidbar. Folglich ist sowohl der zweischichtige Aufbau eines RIM-PU-Schaumkunststoff-Schuheinlegesohlen-Rohlings auch am fertigen Produkt, d.h. bei einem fertigen Schaumkunststoff-Schuheinlegesohlen-Rohling bzw. einer daraus hergestellten Schuheinlegesohle, zumindest für den Fachmann erkennbar, genauso wie das erfindungsgemäße thermoplastisch verformte RIM-PU-Schaumkunststoff-Deckenmaterial. Aus der gestauchten Schaumstruktur ergibt sich auch eine leichte Erkennbarkeit einer thermoplastisch verformten RIM-PU-Deckenlage gegenüber anderen Deckmaterialien, wie z.B. einer PU-Decke aus nicht geschäumten, sondern bspw. extrudierten PU-Schaumkunststoff.

Die erfindungsgemäße thermoplastisch gepresste Schaumkunststofflage aus RIM-PU-Schaumkunststoff kann auf eine obere Formhälfte einer RIM-Schäumform aufgespannt werden. Im Anschluss daran kann die Polyol-Isocyanat-Mischung in die untere Formhälfte der RIM-Schäumform mittels eines Mischkopfes eingebracht und die RIM-Schäumform zu Ausreagieren lassen der Isocyanat/Polyol-Mischung geschlossen werden. Der RIM-PU-Schaumkunststoff wird in diesem Fall von unten an das Deckenmaterial bzw. an die thermoplastisch gepresste Schaumkunststofflage angeschäumt, welche die Ausdehnung des RIM-PU-Schaumkunststoffs nach oben hin begrenzt.

Alternativ oder zusätzlich kann in einem vorhergehenden oder anschließenden Schritt die thermoplastisch gepresste Schaumkunststofflage auch in eine untere Formhälfte einer RIM-Schäumform eingelegt werden und die Polyol-Isocyanat-Mischung mittels eines Mischkopfes auf die thermoplastisch gepresste Schaumkunststofflage aufgebracht werden. Folglich begrenzt die thermoplastisch gepresste Schaumkunststofflage in diesem Fall die Ausdehnung des RIM-PU-Schaumkunststoffs in Richtung der unteren Formhälfte. Der Fachmann erkennt, dass erfindungsgemäße Deckenlagen aus thermoplastisch verformten RIM-PU-Schaumkunststoff beim RIM-Schäumen gleichzeitig in untere als auch obere Schäumformhälfte vor dem Einbringen der zwei Komponenten für den zu erzeugenden Pu-Schaum eingelegt werden können. In diesen Fall schäumen die beiden Komponenten - Isocyanat und Polyol - zwischen den beiden erfindungsgemäßen Schaumkunststofflagen auf, wodurch der spätere Sohlengrundkörper sandwichartig von den beiden erfindungsgemäßen Deckenmaterialien eingeschlossen wird.

Unabhängig vom konkreten Herstellprozess kann die thermoplastisch gepresste Schaumkunststofflage somit die Oberseite und/oder die Unterseite eines Schaumkunststoff-Schuheinlegesohlen-Rohlings bilden. Ebenso kann eine thermoplastisch gepresste Schaumkunststofflage die Oberseite des Rohlings bilden, wobei eine weitere thermoplastisch gepresste Schaumkunststofflage die Unterseite des Rohlings ausbildet. Vorstellbar ist auch, dass die thermoplastisch gepresste Schaumkunststofflage sandwichartig zwischen zwei RIM-PU-Schaumkunststoffschichten eingeschlossen ist. Die Verwendung wenigstens einer thermoplastisch gepressten Schaumkunststofflage macht die Herstellung eines Schuheinlegesohlen-Rohlings besonders effizient, weil der Grundkörper des Rohlings direkt an die thermoplastisch gepresste Schaumkunststofflage angeschäumt wird und damit lediglich eine Minimalzahl an Verfahrensschritten erforderlich ist. Zusätzliche Klebe- oder Bügelschritte mit den hierzu notwendigen Produktionsmitteln und Hilfsstoffen können gänzlich entfallen. Auch in Punkto Sauberkeit und Wertigkeit hat eine erfindungsgemäßen hergestellte RIM-PU-Schaumkunststoff-Schuheinlegesohle eine anmutigereres Erscheinungsbild, wie Schuheinlegesohle mit aufgeklebtem oder aufgebügeltem Deckenmaterial.

Es ist vom Erfindungsgedanken weiter umfasst, dass wenigstens eine zusätzliche herkömmliche Decke in einem anschließenden Schritt auf die Oberseite und/oder die Unterseite des Rohlings aufgeklebt werden kann. Eine solche zusätzliche Decke kann beispielswiese aus herkömmlichen Deckenmaterialien, wie Alcantara, Leder, Textil, Vlies, Fell und/oder andere den Tragekomfort verbessernde und/oder aus einem ein Dekor ausbildendes Material sein.

Durch das Schäumen in der RIM-Schäumform kann der Grundkörper eine 3D-Fußbett Form ausbilden. Diese 3D-Form kann nachträglich, beispielsweise durch Anpassung durch Materialabtrag, wie spanende Bearbeitung des hergestellten PU-Schaumkunststoff-Schuheinlegesohlen-Rohlings, an die Fußform eines Trägers angepasst werden. Die formschlüssige Verbindung zwischen den beiden Schichten bleibt dabei erhalten.

Beim thermoplastischen Pressen der Schaumkunststofflage zum Herstellen eines Deckenmaterials kann beispielsweise ein reliefartiges Dekor auf eine Oberseite der Schaumkunststofflage eingebracht/eingeprägt werden, welches für einen guten Halt und ein angenehmes Tragegefühl sorgen kann. Durch das Bereitstellen einer thermoplastisch gepressten Schaumkunststofflage kann somit der Tragekomfort einer Schaumkunststoff-Schuheinlegesohle verbessert werden. Das reliefartige Dekor kann jedoch auch andere Funktionen erfüllen.

In einer bevorzugten Ausführungsform kann beim thermoplastischen Pressen zumindest auf einer Oberseite der Schaumkunststofflage eine versiegelte Oberfläche gebildet werden, welche für RIM-PU-Schaumkunststoff undurchlässig ist. Eine solche versiegelte Oberfläche verhindert, dass beim Anschäumen von RIM-PU-Schaumstoff an die thermoplastisch gepresste Schaumkunststofflage (flüssiger) Schaumstoff durch die Schaumkunststofflage dringt, welcher anschließend aufwändig entfernt werden müsste, um das optische Erscheinungsbild und die Trageeigenschaften einer Schuheinlegesohle nicht negativ zu beeinflussen. Eine versiegelte Oberfläche, speziell wenn diese eine Außenseite bildet, verbessert auch die hygienischen Eigenschaften einer Schuheinlegesohle, da eine solche versiegelte RIM-PU-Oberfläche nass abwisch- und abwaschbar ist, ohne dass es zu negativen Materialbeeinflussungen oder Festsetzung von Schmutzpartikeln kommt. So kann eine Schuheinlegesohle mit einer erfindungsgemäßen Decke aus thermoplastisch gepressten RIM-PU auch barfuß getragen werden, insbesondere wenn die Oberseite versiegelt ist.

Selbstredend kann das erfindungsgemäße Verfahren auch dann Anwendung finden, wenn der RIM-PU-Schaumkunststoff-Schuheinlegesohlen-Rohling aus mehreren gegebenenfalls unterschiedlichen RIM-PU-Schaumkunststoffmaterialien hergestellt ist, welche insbesondere unterschiedliche Materialhärten aufweisen. So kann beispielsweise das erfindungsgemäße Verfahren ebenso gut mehrmals hintereinander ausgeführt werden, wobei die jeweiligen Zwischenprodukte thermoplastisch gepresst werden können, bevor sie mit einer erneuten Schicht an RIM-PU-Schaumkunststoff angeschäumt werden. Es ist auch vom Erfindungsgedanken umfasst, lediglich Teile einer Schaumkunststofflage thermoplastisch zu pressen. So kann das Verfahren beispielsweise bei PU-Schaumkunststoff-Schuheinlegesohlen-Rohlingen angewendet werden, deren Vorderfußbereich beispielsweise aus einem weicheren RIM-PU-Schaumkunststoffmaterial geschäumt wurde und deren Mittelfußbereich oder Fersenbereich ein härteres RIM-PU-Material aufweist. Die Materialien mit unterschiedlichen Härtegraden, insbesondere verschieden harte RIM-PU-Schaumkunststoffe, können an eine gemeinsame thermoplastisch gepresste Schaumkunststoffdecklage angeschäumt sein, wobei die Schaumkunststofflage eine gemeinsame Ober- oder Unterseite für die RIM-PU-Schaumkunststoffe bilden kann.

Alternativ oder zusätzlich kann die thermoplastisch gepresste Schaumkunststofflage als Trennschicht zwischen den RIM-PU-Schaumkunststoffen angeordnet sein kann. Die Schaumkunststofflage kann zunächst in eine RIM-Schäumform eingelegt oder eingespannt werden, wobei in die untere Formhälfte eine erste Polyol-Isocyanat-Mischung eingebracht wird und gleichzeitig oder im Anschluss eine zweite Polyol-Isocyanat-Mischung auf der Oberseite der Schaumkunststofflage angeschäumt wird, beispielsweise durch Zugabe der zweiten Polyol-Isocyanat-Mischung in der oberen Formhälfte der Schäumform. Dabei kann die erfindungsgemäß thermoplastisch verpresste Schaumkunststofflagenmaterial auch als Trennschicht für zwei Materialbereiche verwendet werden, da das erfindungsgemäßen Schaumkunststofflagenmaterial durch das Verpressen für nicht ausgehärteten RIM-PU-Schaumkunststoff undurchlässig ist. Damit sind mit der erfindungsgemäßen Schaumkunststofflagenmaterial auch Schuheinlegesohle-Rohlinge, wie sie in beispielsweise in EP 3 981 279 A1 beschrieben sind, herstellbar, die ein RIM-PU-Schaumkunststoffmaterial auf einer Oberseite und ein anderes durch eine Öffnung eingebrachte Schaumkunststoffmaterial auf der Unterseite zeigen.

Bei einigen Schuhsohlen wird zur Stützung von Fußbereichen, wie des Mittelfußbereiches ein härteres Schaumkunststoffmaterial verwendet als im Fersenbereich, welcher weicher ausgestaltet sein kann, um das Auftreten beim Gehen zu dämpfen. Gegebenenfalls ist hierzu im Fersenbereich und weiter gegebenenfalls auch im Mittelfußbereich ein Kernteil in den Schaumkunststoff-Schuheinlegesohlen-Rohling integriert oder an diesen angeschäumt und bildet beispielsweise in Teilbereichen seine Unterseite. Das Kernteil hat beispielsweise eine dreidimensionale fußstützende Funktion, um etwa die Ferse in horizontalen Richtungen zu führen. Gleichzeitig kann das Kernteil so ausgebildet sein, dass dessen Mittelfußbereich eine Wölbung aufweist, die das Fußgewölbe unterstützt.

Das Kernteil kann vorgeformt sein, beispielsweise aus PU- oder EVA-Schaumkunststoff, und vor dem Einbringen der Polyol-Isocyanat-Mischung in die entsprechende Formhälfte der RIM-Schäumform eingelegt werden. In besonderen Ausführungsformen kann das Kernteil durch Anschäumen an die thermoplastisch gepresste Schaumkunststofflage direkt in der RIM-Schaumform hergestellt werden. In diesem Fall ist das Kernteil bevorzugt ebenfalls aus PU-Schaumkunststoff gebildet, sodass sich eine stabile Verbindung mit der Schaumkunststofflage beim Anschäumen ausbildet.

Es wird ferner eine zwei- oder mehrschichtige Schaumkunststoff-Schuheinlegesohle mit einem Sohlengrundkörper aus RIM-geschäumten Polyurethan angegeben, der auf einer Oberseite ein orthopädisch ausgestaltetes Fußbett aufweist und an dessen Oberseite und/oder Unterseite eine thermoplastisch gepresste PU-Schaumkunststofflage als Bezug während des RIM-Schäumens stoffschlüssig ohne Verwendung weiterer Klebstoffe angebunden wurde. Insbesondere erfolgt die Anbindung der Schaumkunststofflage nach dem vorstehend beschriebenen Verfahren, wobei die Schaumkunststofflage derart thermoplastisch gepresst wurde, dass diese für den RIM-Schaumkunststoff des Sohlengrundkörpers undurchlässig ist.

Besonders vorteilhaft ist es, wenn die PU-Schaumkunststofflage aus RIM-PU-Schaumkunststoff hergestellt wurde, weil in diesem Fall aufgrund der Materialidentität eine besonders stabile Verbindung zwischen der Schaumkunststofflage und dem klebstofffrei daran angeschäumten Grundkörper hergestellt werden kann. Außerdem besitzt eine derartig ausgestaltete Schaumkunststofflage die positiven Eigenschaften von PU, insbesondere die hohe Widerstandfähigkeit gegen mechanische Belastungen sowie die ausgezeichnete Formbarkeit und spanende Bearbeitbarkeit. Gleichzeitig hat PU-Schaumkunststoff bekanntermaßen gute Hygieneeigenschaften.

Wie vorstehend bereits erläutert, kann eine sichtbare Oberfläche der PU-Schaumkunststofflage ein reliefartiges Dekor zeigen, was mit den oben beschriebenen Vorteilen einhergeht.

Bevorzugte Ausführungsformen erfindungsgemäßer Schaumkunststoffdecklagen und Schaumkunststoff-Schuheinlegesohlen-Rohlinge gemäß der Erfindung mit erfindungsgemäßen Schaumkunststoffdecklagen werden im Folgenden anhand von Figuren beispielhaft dargestellt, wobei die Figuren, bzw. die dort gezeigten Ausführungsformen, den Erfindungsgedanken nicht einschränken. Es zeigen:
- Figuren 1a bis 1c: erfindungsgemäße Schaumkunststoffdecklagen vor und nach einem thermoplastischen Verpressen;
- Figur 2: eine Draufsicht auf einen erstes Ausführungsbeispiel eines erfindungsgemäßen RIM-PU-Schaumkunststoff-Schuheinlegesohlen-Rohlings
- Figur 3: einen Querschnitt längs der Linie A-A durch den in Figur 2 gezeigten erfindungsgemäßen RIM-PU-Schaumkunststoff-Schuheinlegesohlen-Rohling
- Figur 4: einen Längsschnitt längs der Linie B-B durch den in Figur 2 gezeigten erfindungsgemäßen RIM-PU-Schaumkunststoff-Schuheinlegesohlen-Rohling
- Figur 5: ein zweites Ausführungsbeispiel eines erfindungsgemäßen RIM-PU-Schaumkunststoff-Schuheinlegesohle-Rohlings in einem Längsschnitt;
- Figur 6: ein drittes Ausführungsbeispiel eines erfindungsgemäßen RIM-PU-Schaumkunststoff-Schuheinlegesohle-Rohlings.

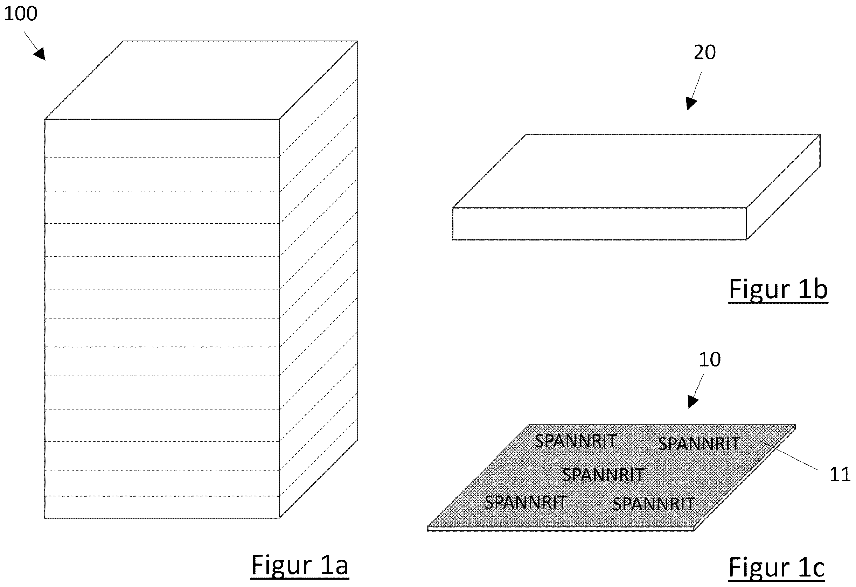

In Figur 1a ist ein Block 100 aus RIM-PU-Schaumkunststoff Material dargestellt, aus dem mehrere erfindungsgemäße Schaumkunststoffdecklagen 10 hergestellt werden können. Dabei zeigen die in Figur 1a gestrichelten Linien mögliche Schnitt- oder Spaltebenen, entlang denen beispielsweise die in Figur 1b dargestellte unverpresste Schaumkunststoffdecklage 20 von dem Block abgetrennt werden kann. So kann mit einem RIM-PU-Block 100 das Ausgangsmaterial für viele Schaumkunststoff-Deckenlagen 10 der Erfindung bereitgestellt werden. Dabei erkennt ein Fachmann, dass weder die Höhen-, Längen- oder Breitenabmessungen auf die in den Figuren 1a bis 1c dargestellten Proportionen limitiert sind, sondern vielfältige Abmessungen und Formen möglich sind, soweit dies der RIM-Prozess im Allgemeinen zulässt. Auch die Spalt- oder Schnittrichtung ist nicht durch das Ausführungsbeispiel in den Figuren 1a bis 1c vorgegeben. So kann der RIM-PU-Block 100 auch eine langgestreckte Quaderform zeigen, die mit senkrechten Schnitten in PU-Platten oder Scheiben 20 geschnitten wird.

Im Sinne der Erfindung werden die in Figur 1b gezeigten thermoplastisch unverpressten Lagen 20 als Platten bezeichnet, um eine semantische Abgrenzung zu den thermoplastisch ver- oder gepressten Schaumkunststoffdecklagen 10 anzugeben. Jedoch soll hiermit lediglich der Wandstärkenunterschied kenntlich gemacht werden. Etwaige Materialeigenschaften sollen mit diesen Termen nicht explizit ausgedrückt werden, insbesondere, da sich die die Materialeigenschaften beim thermoplastischen Pressen verändern.

Ein Fachmann erkennt weiter aus Figur 1b, dass eine solche PU-Platte 20, wie sie in Figur 1b dargestellt ist, direkt im RIM-Verfahren herstellbar ist, und nicht erst mittels Schneiden oder Spalten aus einem RIM-PU-Block 100. Aus einer solchen in Figur 1b gezeigten PU-Platte 20 entsteht nach dem thermoplastischen Pressen/Verpressen in Dickenrichtung die erfindungsgemäße Schaumkunststoffdecklage 10, welche gegenüber der PU-Platte 20 eine sehr viel geringere Wandstärke aufweist.

Die in Figur 1c dargestellte Schaumkunststoffdecklage 10 ist in Dickenrichtung thermoplastisch dauerhaft verformt/verpresst, sodass ihre Wandstärke nun der Wandstärke von herkömmlichen Deckenmaterialien entspricht. Dabei wurde der RIM-PU-Schaumkunststoff durch Einwirken von Wärme und Druck derart verdichtet, dass eine solche Lage 10 nun beispielsweise in eine RIM-Schäumform für die Herstellung von Schuheinlegesohlenrohlingen im RIM-Verfahren eingelegt werden kann.

Ein Fachmann erkennt allerdings, dass eine solche Schaumkunststoffdecklage 10 wie jede andere Decklage, beispielsweise aus Leder, Alcantara, EVA, etc. auch auf andere, bereits gefertigte Schuheinlegesohlenrohlinge aus PU oder EVA geklebt werden können, wobei dann allerdings der erfindungsgemäße Vorteil einer direkten Anschäumbarkeit mit RIM-PU-Schaumkunststoff zum Aufbringen und Festsetzen der Schaumkunststoffdecklage nicht ausgenutzt wird. Ferner ist hierbei ein geeigneter Kleber und ggfs. ein Haftvermittler erforderlich.

Figur 1c zeigt auch, dass die erfindungsgemäße Schaumkunststoffdecklage 10 durch das thermoplastische Warmverpressen auf zumindest einer Seite mit einer Prägung und/oder einem Dekor versehen werden kann, hierdurch sind die erfindungsgemäßen Schaumkunststoffdecklagen 10 individualisierbar, beispielsweise durch Einprägen eines Firmennamens oder Logos. Aber es können auch Strukturen eingeprägt werden die orthopädische und/oder medizinische Funktionen erfüllen, wie eine Durchblutungsförderung oder eine bessere Atmungsaktivität.

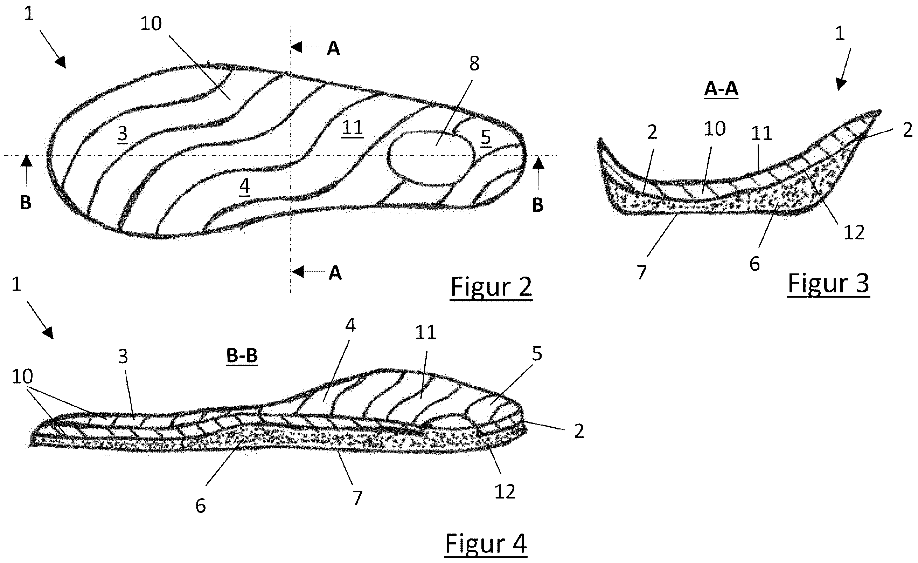

Figur 2 zeigt einen aus RIM-PU-Schaumkunststoff hergestellten Schaumkunststoff-Schuheinlegesohlen-Rohling 1, der auf seiner Oberseite 11 ein dreidimensional ausgebildetes Fußbett zeigt. Der Schaumkunststoff-Schuheinlegesohlen-Rohling 1 weist eine thermoplastisch gepresste Schaumkunststoffdecklage 10 auf. Die thermoplastisch gepresste Schaumkunststoffdecklage 10 ist in der dargestellten Ausführungsform die Oberseite 11 des Schaumkunststoff-Schuheinlegesohlen-Rohlings 1, könnte jedoch auch auf der Unterseite 7 oder sowohl auf der Oberseite 6 als auch auf der Unterseite 7 angeordnet sein.

In allen Darstellungen der Figuren 1 - 6 sind Größenverhältnisse, insbesondere die Dickenverhältnisse aus Gründen der Darstellbarkeit und zu Erläuterungszwecken unverhältnismäßig groß dargestellt. Die Schichtdicke der Schaumkunststofflage 10 kann beispielsweise im Bereich von einigen Millimetern liegen, wohingegen der Schaumkunststoff-Schuheinlegesohlen-Rohling 1 bereichsweise beispielsweise einige Zentimeter dick sein kann, vgl. insbesondere Figuren 3 - 5.

Die thermoplastisch gepresste Schaumkunststofflage 10, welche auch als Deckenmaterial 10 bezeichnet werden kann, ist aus PU-Schaumkunststoff im RIM-Verfahren hergestellt und wurde derart thermoplastisch gepresst, dass ihre Wandstärke bzw. Dicke dauerhaft reduziert wurde. Dazu wurde der Schaumkunststoff der Schaumkunststofflage 10 auf Temperaturen zwischen 100°C und 200°C erwärmt und im warmen Zustand mittels Aufbringen von Druck, beispielsweise zwischen zwei Platten, dauerhaft verformt/verpresst. Dabei ist die Wandstärke der in den Figuren 3 & 4 gezeigten Schaumkunststoffdecklage 10 über die gesamte Sohlenfläche konstant. Dies ist allerdings nicht erforderlich und auch nicht erfindungswesentlich, da die Schaumkunststoffdecklage 10 auch derart thermoplastisch verformt werden kann, dass sie beispielsweise im Vorderfußbereich 3 eine geringere Wandstärke aufweist als im Fersenbereich 5, in dem normalerweise ein höhere Dämpfung gewollt und gewünscht ist.

Die in den Figuren 2 - 4 dargestellte RIM-PU-Schaumkunststofflage 10 weist im Fersenbereich 5 eine Fersenmulde 8 mit einem optisch abgesetzten Bereich auf. Dieser optisch abgesetzte Bereich einer Fersenmulde 8 kann dabei eine Ausnehmung in der Schaumkunststoffdecklage sein, und beispielsweise für den Durchtritt einer Gel-Pelotte oder für ein anderes Fersenpolster vorgesehen sein. Die Ausnehmung in der Schaumkunststoffdecklage 10 kann vor, nach oder während des thermoplastischen Pressens der RIM-PU-Platte 20 in die Schaumkunststofflage 10 eingebracht werden, beispielsweise durch Stanzen oder Ausschneiden, oder auch nach dem thermoplastischen Pressen, beispielsweise durch nachträgliche spanende Bearbeitung der Schaumkunststofflage 10.

Die Oberfläche auf der Oberseite 11 der Schaumkunststofflage 10 der Figur 2 ist mit einem Wellenmuster geprägt und derart versiegelt, dass sie, insbesondere für nichtausgehärteten RIM-PU-Schaumstoff undurchlässig ist. Zum Versiegeln kann die Oberfläche beispielsweise leicht angeschmolzen und anschließend wieder abgekühlt werden, wodurch sich die Schaumstruktur an der Oberfläche auflöst und sich eine Siegelschicht ausbildet. Die Oberfläche der Oberseite 11 weist außerdem ein reliefartiges Dekor auf, um den Halt und das haptische Gefühl bei der Verwendung der Schaumkunststofflage 10 zu verbessern.

Auf der Rückseite 12 der thermoplastisch gepressten Schaumkunststofflage 10 ist ein Grundkörper 6 des Schaumkunststoff-Schuheinlegesohlen-Rohlings 1 angeschäumt. Auch der Grundkörper 6 kann im Fersenbereich 5 eine Fersenmulde 8 aufweisen (nicht gezeigt), die mit der der Ausnehmung für die Fersenmulde 8 der Schaumkunststofflage 10 korrespondiert. Unterhalb des Fersenbereichs 5 und beispielsweise auch in den Mittelfußbereich 4 hineinragend, kann der dargestellte Schaumkunststoff-Schuheinlegesohlen-Rohling 1 bzw. der Grundkörper 6 des Rohlings 1 auf seiner Unterseite 7 ein Kernteil 9 aufweisen, welches als orthopädisch wirksames Einlegeteil vor dem RIM-PU-Schäumen in die Schäumform eingelegt wurde und den Fersenbereich mehr Stabilität verleiht.

Der zur Herstellung des Schaumkunststoff-Schuheinlegesohlen-Rohlings 1 wird bevorzugt PU im RIM-Verfahren erzeugt, weil der Grundkörper 6 so direkt an die thermoplastisch gepresste Schaumkunststofflage 10 angeschäumt werden kann und sich stoffschlüssig und mit großer Haftkraft mit der thermoplastisch gepressten Schaumkunststofflage 10 verbindet. Der so hergestellte Schuheinlegesohlen-Rohling 1 kann im Anschluss zugeschnitten werden oder weiterbearbeitet werden, beispielsweise um ein Fußbett auf dessen Oberseite auszuformen oder an die Fußanatomie eines Trägers des Schuheinlegesohle anzupassen. Der Schuheinlegesohlen-Rohling 1 verhält sich dabei aufgrund der stoffschlüssigen Verbindung zwischen der thermoplastisch gepressten Schaumkunststofflage 10 und dem daran angeschäumten RIM-PU-Schaumkunststoff wie ein einstückiger Fräsblock, welcher den beim Spanen auftretenden hohen Scherbelastungen widersteht, ohne dass sich die aneinander anhaftenden Schichten voneinander lösen.

Ein nach dem erfindungsgemäßen Verfahren hergestellter Schaumkunststoff-Schuheinlegesohlen Rohling 1 weist somit, wie in den Figuren 3, 4 & 5 gut erkennbar, zumindest zwei Schichten auf: einen Grundkörper 6 und eine thermoplastisch gepresste Schaumkunststofflage 10. Die thermoplastisch gepresste Schaumkunststofflage 10 ist stoffschlüssig mit dem Schaumkunststoff der Oberseite und/oder Unterseite 7 des Grundkörpers 6 des Schuheinlegesohlen-Rohlings 1 verbunden. Die beiden Schichten sind auch nach dem Herstellen des Rohlings 1 optisch voneinander zu unterscheiden, beispielsweise durch die Beschaffenheit des jeweiligen PU-Schaummaterials, insbesondere durch die Porengröße, da der Sohlengrundkörper 6 aus unverpresstem RIM-PU-Schaumkunststoff RIM-geschäumt ist.

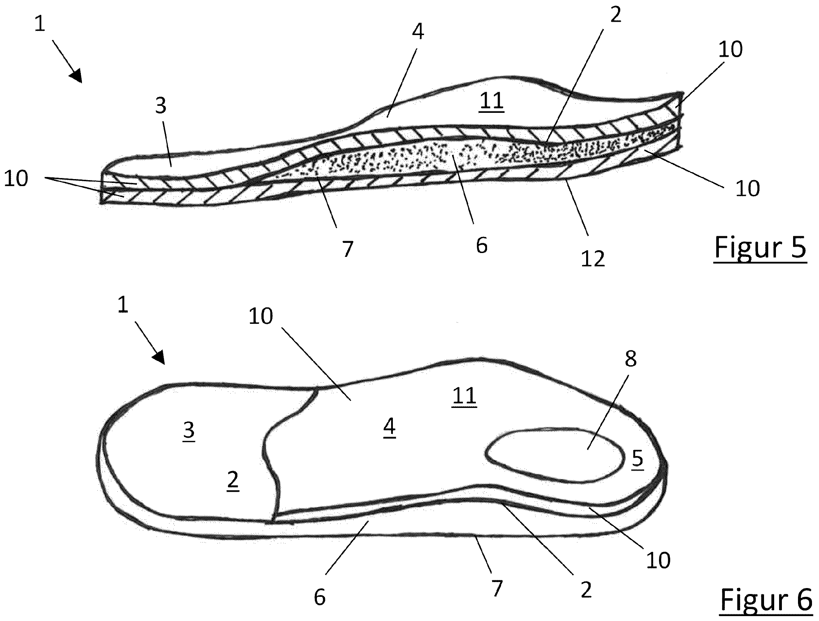

Selbstredend kann, wie in Figur 5 gezeigt, der Grundkörper 6 auch auf seiner Unterseite 7 mit einer thermoplastisch gepressten Schaumkunststofflage 10 vorgesehen sein, was besonders dann vorteilhaft ist, wenn die thermoplastisch gepresste Schaumkunststofflage 10 durchschlaghemmend oder durchschlagsicher sein soll. Dabei können beide Seiten des Grundkörpers 6, also die Oberseite und die Unterseite 7 eine thermoplastisch gepresste Schaumkunststofflage 10 aufweisen.

Das Aufbringen einer thermoplastisch gepressten Schaumkunststofflage 10 auf einen im RIM-Schäumverfahren hergestellten Schaumkunststoff-Schuheinlegesohlen-Rohling 1 bzw. das Anschäumen eines Grundkörpers 6 an eine thermoplastisch gepresste Schaumkunststofflage 10 stellt in einfacher Art und Weise einen optisch ansprechenden und hohen Tragekomfort aufweisenden Schaumkunststoff-Schuheinlegesohlen-Rohling 1 bzw. Schuheinlegesohle bereit, dessen Herstellung aufgrund des einfachen Herstellverfahrens kostengünstig ist. Der Rohling 1 ist abriebfest und weist ausgezeichnete elastische Eigenschaften auf, kann jedoch durch einen Orthopädie-Techniker mittels Schleifen oder Fräsen bearbeitet werden.

Für das Herstellen eines Schaumkunststoff-Schuheinlegesohlen-Rohlings 1 mit einer thermoplastisch gepressten Schaumkunststofflage 10 sind keine Klebstoffe erforderlich. Vielmehr weist die zwischen der thermoplastisch gepressten Schaumkunststofflage 10 und dem daran angeschäumten RIM-PU-Schaumkunststoff ausgebildete stoffschlüssige Verbindung eine höhere Haftkraft auf als eine Klebeverbindung, wodurch ein widerstandsfähigerer Schaumkunststoff-Schuheinlegesohlen-Rohling 1 bereitgestellt wird. Diese hohe Verbindungskraft zwischen Grundkörper 6 und Schaumkunststoffdecklage 10 ermöglicht auch einen nur teilweisen Bezug des Grundkörpers 6 mit der Schaumkunststoffdecklage 10, so wie in Figur 6 schematisch gezeigt. Die dort gezeigte Schuheinlegesohle 1 weist im Vorderfußbereich 3 keine Schaumkunststoffdecklage 10 auf, wodurch die Schuheinlegesohle 1 in diesem Bereich besonders flach ausgebildet werden kann. Im Mittelfußbereich 4 und im Fersenbereich 5, in denen oft ein höherer Tragekomfort erwünscht ist, ist der Schuheinlegesohle-Rohling 1 der Figur 6 jedoch gemäß der Erfindung mit einer erfindungsgemäßen Schaumkunststoffdecklage 10 während des PU-RIM-Schäumens versehen worden, wobei der Fersenbereich 8 für die Aufnahme beispielsweise eines Fersenpolsters ausgespart wurde.

Für den einschlägigen Fachmann ergibt sich aus den obigen Erläuterungen, dass eine Vielfalt unterschiedlicher RIM-PU-Schaumkunststoff-Schuheinlegesohle-Rohlinge, welche nicht in den beiliegenden Figur gezeigt sind, mit einer erfindungsgemäßen Schaumkunststoffdecklage 10 versehen werden können, ohne vom Erfindungsgedanken abzuweichen. Eine aus thermoplastisch warmverpressten RIM-PU-Schaumkunststoff hergestellte Decklage 10 beim Schäumvorgang für einen Schuheinlegesohle-Grundkörper kann direkt ohne Haftvermittler oder die Verwendung von Klebstoffen an den Grundkörper 6 eine RIM-PU-Schaumkunststoff-Schuheinlegesohle festgesetzt werden. Daher sind alle nicht gezeigten Ausführungsformen von RIM-PU-Schaumkunststoff-Schuheinlegesohlen-Rohlingen mit direkt angeschäumter thermoplastisch warmverformter Decklage 10 vom Schutzumfang der vorliegen Erfindung umfasst.

Ferner umfasst der Erfindungsgedanke auch die thermoplastisch warmverformte Decklage 10 selbst, die aus einer RIM-PU-Platte 20 oder einer Scheibe eines RIM-PU-Blocks hergestellt wurde, indem die Platte 20 oder die Scheibe 20 bei erhöhter Temperatur und unter Einwirkung von Druck thermoplastisch derart in ihrer Wandstärke reduziert wurde, dass eine als Decklage verwendbare RIM-PU-SchaumkunststoffDecklage 10 entsteht, die sich in einem weiteren RIM-PU-Verfahrensschritt mit RIM-PU-Schaumkunststoff stoffschlüssig verbinden lässt.

### Bezugszeichenliste

- 1: Schaumkunststoff-Schuheinlegesohlen-Rohling
- 2: Oberseite Sohlengrundkörper
- 3: Vorderfußbereich
- 4: Mittelfußbereich
- 5: Fersenbereich
- 6: Grundkörper
- 7: Unterseite Sohlengrundkörper
- 8: Fersenmulde
- 9: Kernteil

- 10: thermoplastisch gepresste Schaumkunststofflage
- 11: Oberseite Schaumkunststofflage
- 12: Rückseite Schaumkunststofflage
- 20: RIM-PU-Schaumkunststoffplatte
- 100: RIM-PU-Schaumkunststoffblock

## Patentansprüche

1. Verfahren zum Herstellen eines Deckenmaterials zum Aufbringen auf Schuheinlegesohlen-Rohlinge (1) als Oberdecke und/oder Unterdecke, mit den Schritten:
i) Herstellen im RIM-Verfahren einer PU-Schaumkunststofflage (100, 20);
ii) thermoplastisches Pressen der PU-Schaumkunststofflage (20) in einer Pressvorrichtung derart, dass die Wandstärke der Schaumkunststofflage (10) dauerhaft reduziert wird;

2. Verfahren zum Herstellen eines Deckenmaterials nach Anspruch 1, mit einem Zwischenschritt:
iz) in dem die PU-Schaumkunststofflage (100) in zwei oder mehrere dünnere PU-Schaumkunststofflagen (20) geschnitten wird, die dann im Schritt ii) thermoplastisch gepresst werden.

3. Verfahren zum Herstellen eines Deckenmaterials nach Anspruch 1 oder 2, bei dem die PU-Schaumkunststofflage (10) in Schritt ii) bei Temperaturen zwischen 100°C und 200°C thermoplastisch gepresst wird.

4. Verfahren zum Herstellen eines Deckenmaterials nach einem der Ansprüche 1 bis 3, bei dem im Schritt ii) zumindest auf einer Oberseite (11) der PU-Schaumkunststofflage (10) eine versiegelte Oberfläche gebildet wird, die für RIM-PU-Schaumkunststoff undurchlässig ist.

5. Verfahren zum Herstellen eines Deckenmaterials nach einem der Ansprüche 1 bis 4, bei dem während des thermoplastischen Pressens ein reliefartiges Dekor auf eine Oberseite (11) der Schaumkunststofflage (10) eingebracht/eingeprägt wird.

6. Verfahren zum Herstellen einer Schaumkunststoff-Schuheinlegesohle aus Polyurethan (PU) im RIM-Schäumverfahren, mit den Schritten:
A. thermoplastisches Pressen einer Schaumkunststofflage (20) aus PU-Schaumkunststoff in einer Pressvorrichtung derart, dass die Wandstärke der PU-Schaumkunststofflage (10) dauerhaft reduziert wird;
B. Einlegen in / Aufspannen der thermoplastisch gepressten Schaumkunststofflage (10) auf eine Formhälfte einer RIM-PU-Schäumform;
C. Einbringen einer Polyol-Isocyanat-Mischung in die RIM-PU-Schäumform zum Ausbilden eines Sohlengrundkörpers (6) aus RIM-PU-Schaumkunststoff;
D. Schließen der RIM-PU-Schäumform und ausreagieren lassen der Polyol-Isocyanat-Mischung, wobei die thermoplastisch gepresste Schaumkunststofflage (10) durch Anschäumen von RIM-PU-Schaumkunststoff während der Ausbildung des Sohlengrundkörpers (6) an diesen stoffschlüssig angebunden wird;
E. Entnehmen eines PU-Schaumkunststoff-Schuheinlegesohlen-Rohlings (1) nach Aushärten des RIM-PU-Schaumkunststoffs;
F. Zuschneiden des PU-Schaumkunststoff-Schuheinlegesohlen-Rohlings (1) in eine Schuhsohlenform.

7. Verfahren zum Herstellen einer Schaumkunststoff-Schuheinlegesohle nach Anspruch 6, bei dem im Schritt B die thermoplastisch gepresste Schaumkunststofflage (10) auf eine obere Formhälfte einer RIM-PU-Schäumform aufgespannt wird und im Schritt C die Polyol-Isocyanat-Mischung in die untere Formhälfte der RIM-PU-Schäumform mittels eines Mischkopfes eingebracht wird.

8. Verfahren zum Herstellen einer Schaumkunststoff-Schuheinlegesohle nach Anspruch 6, bei dem im Schritt B die thermoplastisch gepresste Schaumkunststofflage (10) in eine untere Formhälfte einer RIM-PU-Schäumform eingelegt wird und im Schritt C die Polyol-Isocyanat-Mischung mittels eines Mischkopfes auf die thermoplastisch gepresste Schaumkunststofflage (10) aufgebracht wird.

9. Verfahren zum Herstellen einer Schaumkunststoff-Schuheinlegesohle nach einem der Ansprüche 6 bis 8, bei dem die Schaumkunststofflage (20) in Schritt A bei Temperaturen zwischen 100°C und 200°C thermoplastisch gepresst wird.

10. Verfahren zum Herstellen eines Schaumkunststoff-Schuheinlegesohle nach einem der Ansprüche 6 bis 9, bei dem im Schritt A zumindest auf einer Oberseite (11) der Schaumkunststofflage (10) eine versiegelte Oberfläche gebildet wird, die für RIM-PU-Schaumkunststoff undurchlässig ist.

11. Verfahren zum Herstellen einer Schaumkunststoff-Schuheinlegesohle nach einem der Ansprüche 6 bis 10, bei dem während des thermoplastischen Pressens der Schaumkunststofflage (20) ein reliefartiges Dekor auf eine Oberseite (11) der Schaumkunststofflage (10) eingebracht/eingeprägt wird.

12. Zwei- oder mehrschichtige Schaumkunststoff-Schuheinlegesohle mit einem Sohlengrundkörper (6), der auf einer Oberseite (2) ein orthopädisch ausgestaltetes Fußbett aufweist und an dessen Oberseite (2) und/oder Unterseite (7) eine thermoplastisch gepresste RIM-PU-Schaumkunststofflage (10) als Bezug aufgebracht wurde, wobei die RIM-PU-Schaumkunststofflage (10) derart thermoplastisch verpresst ist, dass diese für den RIM-Schaumkunststoff undurchlässig ist.

13. Schaumkunststoff-Schuheinlegesohle nach Anspruch 12, bei der der Sohlengrundkörper (6) aus RIM-geschäumten Polyurethan (PU) hergestellt wurde und die RIM-PU-Schaumkunststofflage (10) während des RIM-Schäumens stoffschlüssig ohne Verwendung weiterer Klebstoffe an eine Oberseite (2) und/oder Unterseite (7) des Sohlengrundkörper (6) angebunden wurde.

14. Schaumkunststoff-Schuheinlegesohle nach einem der Ansprüche 12 oder 13, bei der eine sichtbare Oberfläche (11) der PU-Schaumkunststofflage (10) ein reliefartiges Dekor zeigt.

15. Schaumkunststoff-Schuheinlegesohle nach einem der Ansprüche 12 bis 14, bei der die RIM-PU-Schaumkunststofflage (10) den Sohlengrundkörper (6) auf dessen Oberseite (2) und/oder Unterseite (7) nur teilweise überdeckt.
